# EUROPEAN PATENT APPLICATION

(11) **EP 4 178 125 A1**
(43) Date of publication of application: **10.05.2023**
(21) Application number: 22203921.6
(22) Date of filing: 26.10.2022
(51) Int. Cl.: H04B 17/23, H04B 17/345, H04W 24/08

(54) **TEST DEVICE AND METHOD FOR INTERFERENCE TESTING OF TIME DOMAIN DUPLEXING SIGNALS**

(30) Priority: 04.11.2021 US 202163275771 P; 07.12.2021 US 202117544742
(71) Applicant: Viavi Solutions Inc., Chandler, AZ 85286 (US)
(72) Inventor: KIM, Jong-Min, 12284 Namyangju-si (KR); KWON, Hyuck-In, 115-601 Gwangmyeong-si (KR); KIM, Young-Kill, 219-503 Gwacheon-si (KR); IM, Sung-Hwa, 301-1804 Siheung-si (KR); LEE, Jae-Gab, 504-501 Seongnam-si (KR); SHIN, Yoo-Chul, 05094 Gwangjin-gu (KR)
(74) Representative: Murgitroyd & Company

(57) **Abstract**

A test device is operable to detect interference in a time division duplex (TDD) cellular network. The test device can automatically detect a TDD frame structure of RF signals received over the air Eagle Eye from a cell site. The test device determines a transition period between uplink (UL) and downlink (DL) transmissions in which no UL and DL signals are being transmitted based on the TDD frame structure. An interference signal is detected during the transition period, and the test device can generate a display of the spectrum during the transition period that includes the interference signal.

## Description

### TECHNICAL FIELD

This patent application is directed to identifying interference in a time domain duplexing cellular network.

### BACKGROUND

In time division duplex (TDD) cellular networks, the downlink (DL) and uplink (UL) use the same frequency band in different timeslots. Long-Term Evolution Time-Division Duplex (LTE-TDD) is an example of a 4G cellular network standard that uses TDD for scheduling UL and DL transmissions, where both the UL and DL signals occupy the same frequency band and are separated in time rather than frequency. This means that, the entire bandwidth (BW) is allocated to either UL or DL signals for a predefined number of time-slots depending on the chosen subframe (UL/DL) configuration. New Radio (NR) TDD is an example of a 5G cellular network standard that uses TDD.

Identifying and rectifying interference issues in a mobile environment is a challenging but critical task. Mobile users near the interference source can experience degraded call success rates, increased dropped calls, decreased battery life, poor voice quality, and reduced data throughput. Detecting, locating, and finally eliminating sources of radio frequency (RF) interference is critical to maintaining good user experience throughout the cellular network.

Detecting interference in a TDD network can be difficult. When viewing TDD signals on a conventional spectrum display, it is very difficult to differentiate UL and DL transmissions as well as unwanted interference signals present in the same spectrum. This makes identifying interference extremely difficult.

### SUMMARY OF THE DISCLOSURE

According to a first aspect of the present disclosure there is provided a test device to detect interference in a time division duplex (TDD) cellular network, the test device comprising:
a receiver to receive radio frequency (RF) TDD signals;
a display;
a spectrum analyzer; and
a processing circuit to:
   automatically detect a TDD frame structure of the RF signals received via the receiver;
   determine a transition period between uplink (UL) and downlink (DL) transmissions in which no UL and DL signals are being transmitted based on the TDD frame structure;
   detect an interference signal during the transition period; and
   display spectrum data generated by the spectrum analyzer, wherein the spectrum data includes the interference signal.

To automatically detect TDD frame structure of the RF signals, the processing circuit may be arranged to:
determine configuration information of the RF signals, the configuration information comprising one or more of service type, Absolute Radio Frequency Channel Number (AFRCN), bandwidth and center frequency. To determine a transition period, the processing circuit may be arranged to:
   identify a special subframe or a special slot in a received TDD frame; and
   determine a location of a guard period and a duration of the guard period in the special subframe or the special slot, wherein the transition period comprises the guard period. The processing circuit may be arranged to:
determine a frame configuration and a special subframe configuration of the received TDD frame to determine the location and the duration of the guard period,
wherein the frame configuration specifies a pattern of uplink subframes, downlink subframes and special subframes in the received TDD frame, and
the special subframe configuration specifies a number of symbols in each of a Downlink Pilot Time Slot and an Uplink Pilot Time Slot in a special subframe of the received TDD frame. The processing circuit may be arranged to:
   determine a frame configuration that specifies a TDD slot format; and
   determine TDD symbol configuration information for each slot,
wherein the location and the duration of the guard period is determined based on the TDD slot format and the TDD symbol configuration information for each slot. The processing circuit may be arranged to: decode a system information block (SIB) 1 based on the TDD frame structure to determine information for deriving the location and the duration of the guard period. The spectrum data may be displayed as a spectrum trace or persistence. The TDD cellular network may comprise a Long-Term Evolution or a New Radio network. The test device may comprise:
   a location predictor to determine a location of an interference source of the interference signal based on received signal strength (RSS) or power difference of arrival (PDOA).

A method of detecting interference in a time division duplex (TDD) cellular network using a test device, the method comprising:
receiving (RF) signals from a cell site at the test device;
determining a TDD technology used by the cell site for transmitting cellular signals based on the received RF signals;
automatically determining a TDD frame structure of the received RF signals based on the determined TDD technology;
determining a transition period between uplink (UL) and downlink (DL) transmissions in which no UL and DL signals are being transmitted based on the TDD frame structure;
detecting an interference signal during the transition period; and
displaying spectrum data generated by a spectrum analyzer, wherein the spectrum data includes the interference signal.

Automatically determining a TDD frame structure may comprise:
determining configuration information of the received RF signals, the configuration information comprising one or more of service type, Absolute Radio Frequency Channel Number (AFRCN), bandwidth and center frequency. Determining a transition period may comprise:
determining whether the TDD technology comprises Long-Term Evolution (LTE) or New Radio (NR); and
determining information for a guard period in a TDD frame transmitted from the cell site based on whether the TDD technology comprises LTE or NR, wherein the transition period comprises the guard period. Determining information for a guard period may comprise:
   identify a special subframe or a special slot in a received TDD frame; and
   determine a location of the guard period and a duration of the guard period in the special subframe or the special slot. The method may further comprise:
determining a frame configuration and a special subframe configuration of the received TDD frame to determine the location and the duration of the guard period. The frame configuration may specify a pattern of uplink subframes, downlink subframes and special subframes in the received TDD frame. The special subframe configuration may specify a number of symbols in each of a Downlink Pilot Time Slot and an Uplink Pilot Time Slot in a special subframe of the received TDD frame. The method may further comprise:
   determining a frame configuration that specifies a TDD slot format; and
   determining TDD symbol configuration information for each slot,
wherein the location and the duration of the guard period is determined based on the TDD slot format and the TDD symbol configuration information for each slot. The spectrum data may bedisplayed as a spectrum trace or persistence. The method may further comprise:
   determine a location of an interference source of the interference signal based on received signal strength (RSS) or power difference of arrival (PDOA).

According to a third aspect of the present disclosure there is provided a test device to detect interference in a time division duplex (TDD) cellular network, the test device comprising:
a receiver to receive radio frequency (RF) TDD signals;
a display;
a spectrum analyzer; and
a processing circuit to:
   determine whether the RF signals comprise Long-Term Evolution (LTE) TDD frames or New Radio (NR) TDD frames
   automatically detect a TDD frame structure of the TDD frames based on whether the TDD frames are determined to be LTE or NR;
   determine a length and duration of a guard period between uplink (UL) and downlink (DL) transmissions in which no UL and DL signals are being transmitted based on the TDD frame structure;
   detect an interference signal during the guard period; and
   display spectrum data generated by the spectrum analyzer, wherein the spectrum data includes the interference signal.

### BRIEF DESCRIPTION OF DRAWINGS

Features of the present disclosure are illustrated by way of example and not limited in the following Figure(s), in which like numerals indicate like elements, in which:
Figure 1 shows a test device in a test environment, according to an example;
Figure 2 shows a method for testing for interference in a TDD network, according to an example;
Figure 3 shows two examples of frames configurations including guard periods for different TDD technologies;
Figure 4 shows a method for testing for interference including additional detail regarding a guard period, according to an example;
Figures 5-6 show decoding system information block 1 for determining guard period information that can be used to test for interference in different TDD technologies, according to examples; and
Figure 7 shows a block diagram of the test device, according to an example.

### DETAILED DESCRIPTION

For simplicity and illustrative purposes, the present disclosure is described by referring mainly to examples and embodiments thereof. In the following description, numerous specific details are set forth in order to provide a thorough understanding of the present disclosure. It will be readily apparent, however, that the present disclosure may be practiced without limitation to these specific details. In other instances, some methods and structures readily understood by one of ordinary skill in the art have not been described in detail so as not to unnecessarily obscure the present disclosure. As used herein, the terms "a" and "an" are intended to denote at least one of a particular element, the term "includes" means includes but not limited to, the term "including" means including but not limited to, and the term "based on" means based at least in part on.

According to an example of the present disclosure, a test device is operable to perform Radio frequency interference (RFI) testing. RFI is defined as the effect of unwanted energy from emissions, radiation, conduction, or induction upon the reception of a radio communication system. The test device can perform interference testing to detect interference, e.g., RFI, in channels used in TDD technologies, e.g., 4G LTE TDD, 5G NR TDD, and other TDD technologies. In an example, the test device identifies time periods in which a UL or DL signal is not transmitted at transition times between UL and DL transmissions. The test device identifies signals in these time periods as the interference signals and can display these interference signals on a display of the test device. By identifying signals during the transition periods as interference signals, an unencumbered view of the interference signals is provided for display and further signal analysis. This is a technical improvement over existing interference signal analysis which may require a technician to view all signals during a time period, which may include UL transmissions, DL transmissions and interference signals, and then determine which signals are interference signals if any. Furthermore, the test device may perform additional signal analysis if interference is detected to determine location of an unwanted interference source, so the interference source can be removed.

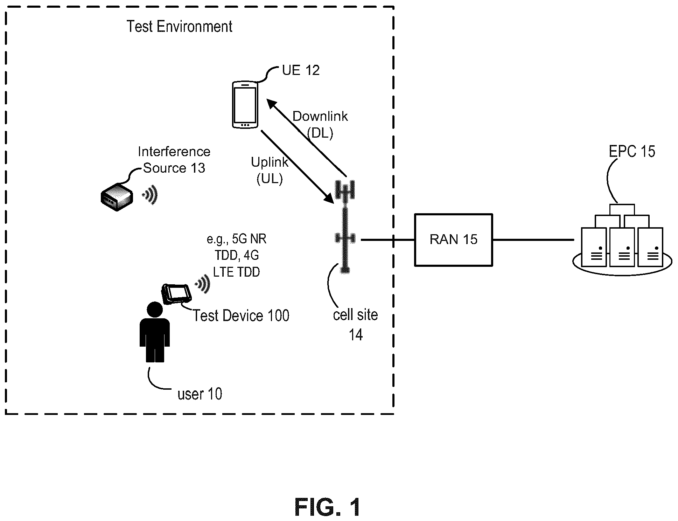

Figure 1 illustrates a test device 100 operable to perform the interference testing to detect interference which can degrade the quality of experience of a customer of a cellular service provider utilizing a TDD technology. 4G LTE TDD and 5G NR TDD are examples of commonly used TDD technologies. The test environment may include cell site 14, which includes a cell tower or cellular base station having antennas and electronic communications equipment to support cellular mobile device communication in a TDD technology. The antennas and equipment are typically placed in connection with a radio mast or tower, and the equipment generally connects cell site air interfaces to wireline networks, which may be comprised of fiber optic cables and/or coaxial cables. Typically, the cell site 14 may be connected to backhaul via a radio access network (RAN) 15 and the backhaul connects to Evolved Packet Core (EPC) 15.

A customer of the cellular service provider may use user equipment (UE) 12 for communicating with the cell site 14 in the TDD technology. The communications include UL and DL transmissions supported by the cell site 14. UE 12 may be a smartphone or other wireless device. A user 10, such as a cellular service provider technician, may use the test device 100 to perform the interference testing. In an example use case, the interference testing may be performed when the cell site is being installed, such as to ensure proper operation of the cell site with UE, such as smartphones or other end user cellular devices. In another example use case, after installation, customers of the cellular service provider may be experiencing degraded service, and the user 10 uses the test device 100 to perform interference testing to detect and resolve interference that can be cause service issues.

In an example, an interference source 13 may be generating RF signals that interfere with the uplink or downlink communications of the UE 12. The test device 100 may be used to detect the interference signals generated by the interference source 13, and may perform further analysis to determine a geographic location of the interference source 13 within the test environment. The test environment may be based on the cell size of the cell site 14.

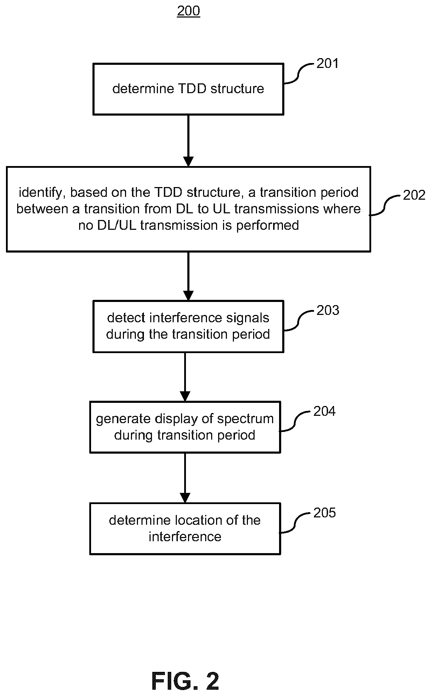

Figure 2 shows a method 200 for detecting interference according to an example of the present disclosure. One or more steps of the method 200 may be performed by the test device 100.

At 201, the test device 100 determines a TDD structure of a received RF TDD signal. This may include a TDD structure of a TDD signal received from cell site 14. In LTE TDD, there are 7 predetermined frame configurations, based on different DL/UL partitions. A DL/UL ratio can vary from 1/3 (Frame configuration = 0) to 8/1 (Frame configuration = 1). The cellular service provider can choose a specific TDD configuration depending on the service requirements. The frame configuration is specified in a subframe. For example, a frame starts with a DL subframe. The DL subframe includes frame descriptor information. The test device 100 can determine TDD structure information from the DL subframe that starts the frame. The TDD structure information for LTE and 5G NR is further described below.

At 202, the test device 100 identifies, based on the TDD structure, a transition period between a transition from DL to UL transmissions where no UL or DL transmissions are performed. The transition period is a period of time. In an example, the transition period is a guard period (GP) for switching from DL to UL transmissions to avoid collisions between UL and DL transmissions. The GP provides sufficient time for a DL delayed signal to arrive due to path distance, and also gives enough opportunity for a UE to receive a UL timing advance command from the base station. The GP is provided in a special subframe for LTE TDD and in a special slot for NR TDD as is further described below.

At 203, the test device 100 detects interference signals during the transition period determined from 202 if the interference signals exist during the transition period. For example, the test device 100 includes a spectrum analyzer 721 that can detect signals in the channel, e.g., frequency band of the TDD signal, during the transition period. These detected signals are considered interference because no DL or UL transmissions between UE 12 and cell site 14 are done during the transition period. For example, signals in the channel during the transition period that have an amplitude, e.g., power, above a threshold are considered interference signals.

At 204, a display of the spectrum during the transition period is generated on a display of the test device 100 and shows interference signals if any are detected during the transition period. Examples of different display formats include spectrum, persistence, spectrogram and waterfall. Detected interference can be displayed on the display in the form of spectrum data, e.g., spectrum trace or persistence display.

At 205, a location predictor 722 of the test device 100 can estimate the location of the interference, e.g., the location of the interference source 13, if interference is detected during the transition period. The location predictor 722 may include machine readable instructions executed by a processor and/or other hardware. Estimation of location of the interference source 13 may be based on Received Signal Strength (RSS) and/or Power Difference of Arrival (PDOA). In an example the test device 100 may include or be connected to equipment having the location predictor 722. The location predictor 722 may include an interference advisor. The interference advisor is an automated, easy-to-use interference hunting solution that allows users to quickly locate an interference source by following guidance on a map application. The interference advisor can provide an integrated antenna solution with a GPS antenna. It supports three tracking modes: Received Signal Strength Indicator (RSSI), Channel Power, and Peak Power to track down most of types of interference signals. Mapping software provides visual and voice prompts to guide technicians to the suspected area of interference. A spectrum display quickly allows technicians to validate any change in signal strength of the interfering source and its location. In another example, location predictor 722 includes an antenna advisor that enables technicians at any skill level to quickly find RF interference. The antenna advisor automatically and dynamically creates intersection vectors based on three or more interference measurements. A display can be generated that includes the physical coordinates and a mapped location of the interference source.

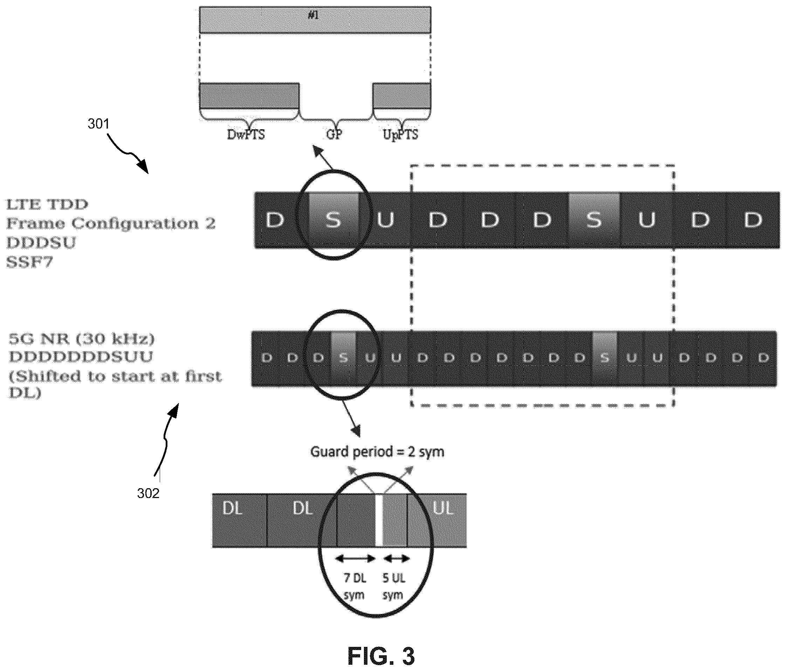

As discussed above with respect to steps 202-203, the test device 100 identifies, based on the TDD structure, a transition period, in which no DL and UL transmissions are performed to or from a UE. As further indicated above, in an example, the transition period is a GP used for switching from DL to UL transmissions for a UE to avoid UL/DL collisions. Figure 3 shows two examples of frames for different TDD technologies that include the GP.

Figure 3 shows frame configuration 2 for LTE TDD at 301. In LTE TDD one frame is divided into 10 subframes (1 millisecond (ms) each). The subframes can be UL or DL subframes or a special subframe, also referred to as SSF, containing the GP. The 3rd Generation Partnership Project (3GPP) consortium specifies 7 TDD frame configurations for LTE, and each frame configuration specifies a sequence of the UL, DL and special subframes. The sequence is also referred to as a pattern of subframes. A cellular network service provider may select one of the frame configurations to implement for LTE TDD transmission in the cellular network. At 301, figure 3 shows frame configuration #2 of the 7 TDD frame configurations specified by 3GPP for LTE TDD. Also shown is the format of the special subframe with the GP. The special subframe has three past DwPTS(Downlink Pilot Time Slot), GP (Guard Period) and UpPTS (Uplink Pilot Time Slot) and all of these have configurable lengths while the sum of the lengths is 1 ms or 14 symbols. As discussed above, the GP is used to control the switching between the UL and DL transmission. The 3GPP specified standard for LTE TDD describes 9 special subframe configurations, each have different number of OFDM symbols for DwPTS, GP and UpPTS. In the LTE TDD frame configuration example shown in figure 3 at 301, special subframe configuration 7 (SSF7) is used.

Figure 3 also shows a frame configuration for 5G NR TDD at 302. Unlike LTE TDD, 5G NR determines the frame configuration based on predetermined parameters that are further discussed below. The number of symbols in the 5G NR GP is 2, and the duration of the GP is based on the symbols.

The test device 100 determines when the GP will occur and the duration of the GP based on TDD structure information in order to test for interference during the GP. The test device 100 may determine configuration information and TDD structure information from system information block (SIB) 1. For example, for a UE to communicate with a cellular network, the UE goes through a synchronization process with the network. The UE obtains the master information block (MIB) to determine various parameters to communicate with the network. Then, the UE starts to listen for SIB1 which is carrying cell access related information. SIB1 is a special SIB which has a fixed schedule with a periodicity of 80 ms and repetitions made within 80 ms. The first transmission of SIB1 is scheduled in subframe #5 of the radio frames for which the system frame number (SFN) mod 8 = 0, and repetitions are scheduled in subframe #5 of all other radio frames for which SFN mod 2 = 0. In LTE TDD, the10 ms frames have numbers between 0 and 1023 and these numbers are called SFNs. For 5G NR, SIB1 is transmitted on the Downlink Shared Channel (DL-SCH) (logical channel: Broadcast Control Channel (BCCH)) with a periodicity of 160 ms and variable transmission repetition periodicity within 160 ms. SIB1 is a cell-specific SIB. In order for the UE to decode SIB1 for 5G NR, all the required information is obtained from the MIB. Thus, the test device 100 locates SIB1 in a frame transmitted from the network, and decodes SIB1 to determine information for locating the GP and to determine its duration, such as slot and/or symbol information.

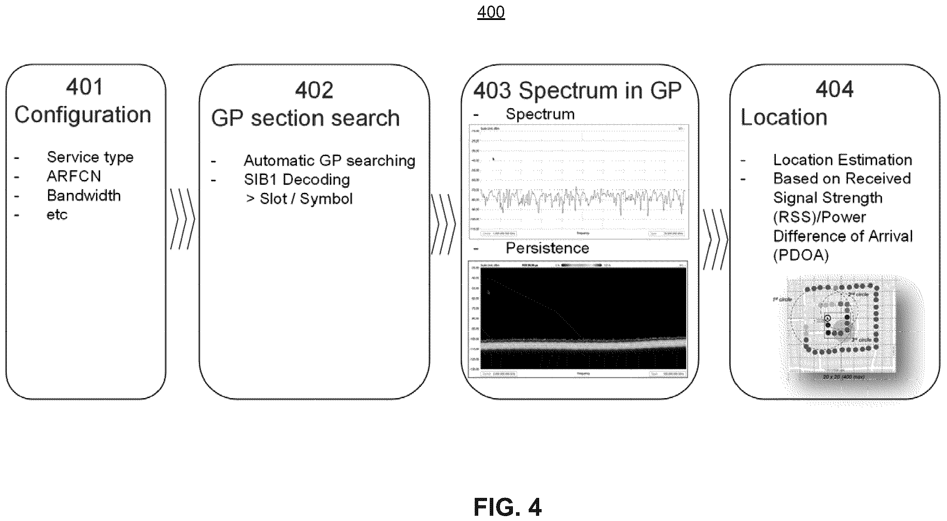

Figure 4 shows an operational flow chart of a method 400 similar to the method 200 but provides additional details regarding the GP. The method 400 may be performed by the test device 100. At 401, configuration information for TDD transmission is determined, such as service type (e.g., technology such as LTE TDD, 5G NR, etc.), center channel, absolute radio-frequency channel number (ARFCN), bandwidth (e.g., channel size), etc. At 402, a GP search is performed based on the configuration information to determine when the GP will occur and its duration. The GP search may include decoding SIB1 to determine the GP information. At 403, the spectrum during the GP is determined and displayed. The displayed spectrum shows interference signals if any are detected during the GP. At 404, a location of the interference source is estimated if interference signals are detected during the GP.

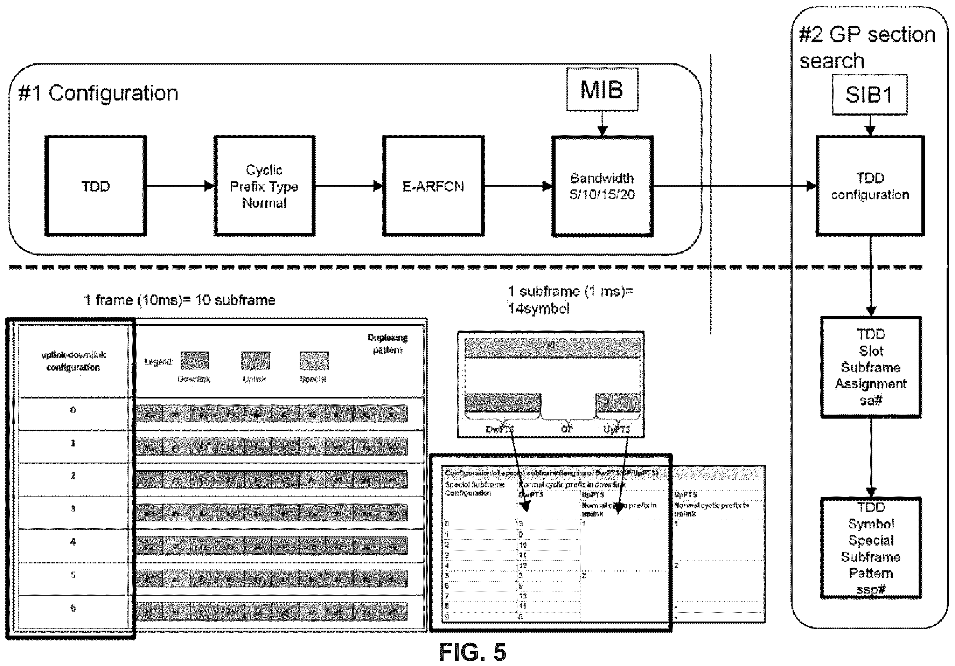

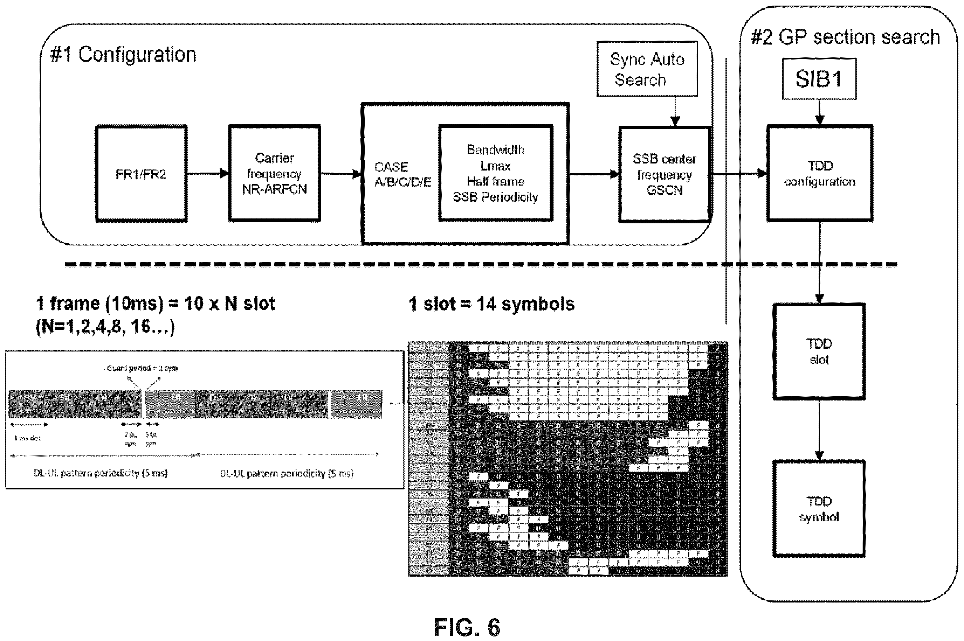

The GP search includes decoding SIB1 to determine information about the special subframe for LTE TDD or the special slot for 5G NR and information about the GP which can be used to derive when the GP will occur and the duration of the GP. This information is further described below with respect to figures 5 and 6 for the LTE TDD case and the 5G NR case.

Figure 5 shows additional details specific to LTE TDD for performing the method 400. For example, as shown in figure 5, configuration information is determined. The configuration information may include service type, such as LTE TDD, Cyclic Prefix Type (e.g., normal or extended), E-ARFCN, and bandwidth. E-ARFCN is the EUTRA Absolute radio-frequency channel number. It identifies the uplink and downlink in LTE frequencies. The bandwidth can be determined from the MIB. The GP search is performed based on the configuration information.

The GP search includes decoding SIB1 to determine TDD frame structure information that can be used to derive when the GP will occur and the duration of the GP. The frame structure information is now described. In LTE TDD, the total frame duration is 10 ms; there are a total of 10 subframes in a frame; and each subframe will have 2 time slots. There are 7 different frame configurations. Each frame configuration specifies a sequence of UL, DL and special subframes, i.e., a subframe pattern. The particular frame configuration that is implemented for the network is determined. Also, a DL to UL switch point periodicity is specified. The switch point periodicity is either a 5 ms periodicity or a 10 ms periodicity. For the 5 ms switch point periodicity, the special subframe containing the GP is provided at subframe #1 and subframe #6. For a 10 ms periodicity frame, there is only one special subframe, and it is as subframe #1.

A special subframe has three past DwPTS, a GP and a UpPTS, and each of the DwPTS, GP and UpPTS have configurable lengths while the sum of the lengths remains constant, e.g., 1 ms or 14 symbols. Also, the number of OFDM symbols per slot is 14 for a configuration using normal cyclic prefix. For extended cyclic prefix, the number of OFDM symbols per slot is 12. Also, there are 9 special subframe configurations specified by the GPP, each have different number of OFDM symbols for each of the DwPTS, GP and UpPTS. The particular special subframe configuration being implemented for LTE TDD transmission in the cellular network may be determined by decoding SIB1 (i.e., it is specified in SIB1), and the number of OFDM symbols in the GP for the particular special subframe configuration is predetermined. The duration of the GP, e.g., in ms, can be derived from the number of OFDM symbols in the GP. As shown in figure 5, SIB1 is decoded to determine the TDD structure information discussed above. In particular, the frame configuration is determined, and the special subframe configuration is determined, and a determination of when the GP will occur and its duration are determined based on the frame and special subframe configurations.

Figure 6 shows additional details specific to 5G NR for performing the method 400. In LTE, the subframe number and OFDM symbol number within the subframe is always the same. In NR, there are many different cases of the time domain pattern of SSB transmission as is further discussed below and which can impact the determination of the location and duration of the GP in NR. SS Block (SSB) stands for Synchronization Signal Block which carries synchronization information for UEs connecting to a cell.

As shown in figure 6, configuration information is determined. The configuration information includes FR1/FR2, Carrier frequency NR-ARFCN, Bandwidth, Lmax, Half frame, and SSB Periodicity. FR1 and FR2 refers to 5G frequency ranges. 5G FR1 (Frequency Range 1) consists of Sub-6 GHz frequency bands allocated to 5G. Sub-6 GHz frequencies (low/mid-band) have been classified as Frequency Range 1 (FR1) and frequencies higher than 24 GHz (mmWave) are classified as Frequency Range 2 (FR2). In 5G NR, RF reference frequencies are designated by an NR Absolute Radio Frequency Channel Number (NR-ARFCN) on the global frequency raster. The RF reference frequency FREF in MHz can be calculated from the NR-ARFCN. Bandwidth sets the frequency range and bandwidth for the selected carrier definition and its mapped component carriers. Lmax sets the maximum number of possible SS blocks in a transmission opportunity. This value is fixed for a given carrier bandwidth. Half frame index indicates whether the SSB is transmitted in the first half frame (0) or second half frame (1). SSB periodicity indicates the periodicity of the transmission of the SSB. The SSB center frequency is also determined, which may be done through a blind scan or determined through another technique. The GP search is performed based on the configuration information.

The GP search is performed based on the configuration information. To perform the GP search, SIB1 is decoded to determine NR TDD frame structure information that can be used to derive when the GP will occur and the duration of the GP. The NR TDD frame structure includes frames and subframes similar to the frame structure discussed above with respect to figure 5. DL and UL transmissions are organized into frames. Each frame has a 10 ms duration, and each frame is divided into 10 subframes, and each subframe duration is 1 ms. Each subframe is further divided into multiple OFDM symbols. The number of OFDM symbols in each subframe depends on selected numerology mu (µ), which represents the subcarrier spacing. The number of OFDM symbols in one slot is always fixed (14) but the number of slots in one subframe is variable and it dependent on the particular µ which is implemented.

One difference from LTE TDD pertains to determining the frame configuration specifying the subframe pattern. In LTE TDD, there are 7 predefined frame configurations for UL, DL and special subframe allocation. In 5G NR, there are no predefined frame configurations. Instead, the frame configurations of the frame are defined based on parameters specified in ETSI 38.331 v15.3.0 as follows:

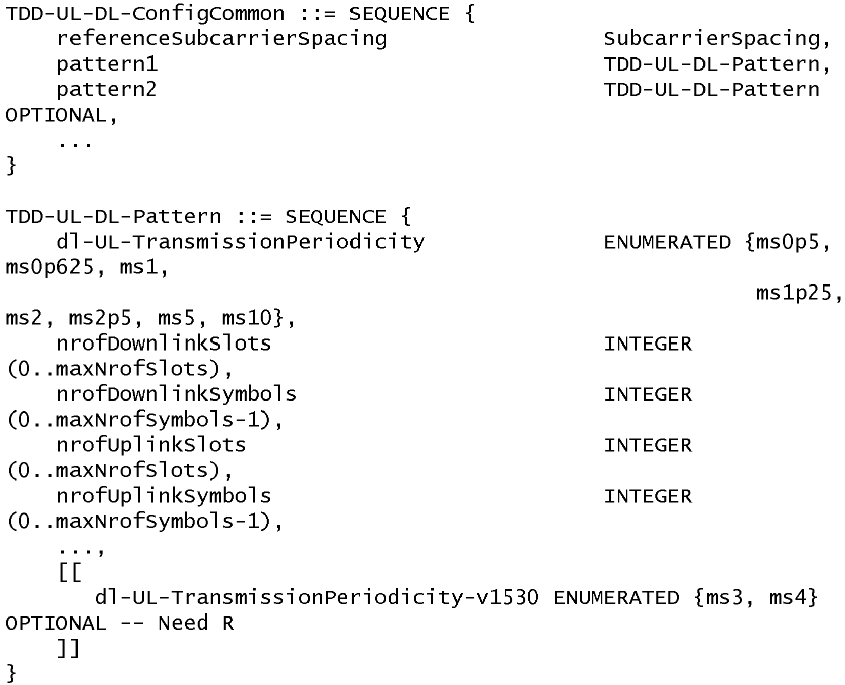

These parameters can be used to determine the GP location in a frame and the GP duration. The dl-UL-TransmissionPeriodicity is the periodicity of the DL-UL pattern. The nrofDownlinkSlots is the number of consecutive full DL slots at the beginning of each DL-UL pattern. The nrofDownlinkSymbols is the number of consecutive DL symbols in the beginning of the slot following the last full DL slot. The nrofUplinkSlots is the number of consecutive full UL slots at the end of each DL-UL pattern. The nrofUplinkSymbols is the number of consecutive UL symbols in the end of the slot preceding the first full UL slot.

The parameters further include subcarrier spacing. In 5G NR, predetermined subcarrier spacings are supported. In particular, subcarrier spacings of 15, 30, 60, 120 and 240 KHz are supported. The numerology mu (µ) discussed above represents the subcarrier spacing. Table 4.2-1 shows the subcarrier spacing and cyclic prefix for each µ.

**Table 4.2-1: Supported transmission numerologies (38.211)**

| ***µ*** | **Δ*f* = 2*^{µ}*·15[kHz]** | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

The slot lengths are different depending on the subcarrier spacing being used. Generally, the slot length gets shorter as subcarrier spacing gets wider. Also, the number of slots per subframe varies with carrier spacing. There can be 1, 2, 4, 8, or 16 slots per subframe. Thus, for each 1 ms subframe, there can be 1, 2, 4, 8, or 16 slots per subframe depending on the subcarrier spacing being used. Accordingly, the duration of the slot in a subframe is dependent on the number of slots per subframe which is based on the subcarrier spacing. This is different than LTE which is fixed at 2 slots per subframe.

Regarding the OFDM symbols for 5G NR, the number of symbols within a slot does not change with the numerology or subcarrier spacing. OFDM symbols in a slot can be classified as 'downlink' (denoted 'D'), 'flexible' (denoted 'X'), or 'uplink' (denoted 'U'). In a slot in a downlink frame, the UE shall assume that downlink transmissions only occur in 'downlink' or 'flexible' symbols. In a slot in an uplink frame, the UE shall only transmit in 'uplink' or 'flexible' symbols. The number of symbols per slot is 14 (in case of Normal CP), and the number of symbols per slot is 12 (in case of Extended CP).

The NR TDD frame structure information, such as defined by 3GPP TS 38.211 V16.0.0 (2019-02) includes: a. Selection of a timing reference (beginning of the frame); b. Selection of a frame format; c. Selection of SubCarrier Spacing (SCS); d. Selection of normal or extended prefix; and e. Selection of a special slot configuration. This information can be used to determine when the GP will occur in a frame and its duration.

The special slot is identified by the letter "S" in all frame structures, i.e., DDDSU or DDDDDDDSUU. The special slot contains the GP. In an example where the subcarrier spacing is 30 kHz, the 10 ms frame contains 20 slots. For other subcarrier spacings, the slot duration is different. For example, 15 kHz subcarrier spacing has 10 slots, a 60 kHz subcarrier spacing has 40 slots, a 120 kHz subcarrier spacing has 80 slots, and a 240 kHz subcarrier spacing has 160 slots per a 10 ms frame. In an example, the correspondence between the GP, expressed as a number of OFDM symbols, and the maximum cell size is the following: a GP of 2 symbols would cater for cell sizes of up to 10.7 km; a GP of 4 symbols would cater for cell sizes of up to 21.4 km; and a GP of 6 symbols would cater for cell sizes of up to 32.1 km. The special slot "S" in the 30 KHz subcarrier spacing should be configured with a ratio of 10 Downlinks, 2 Symbols Guard Period and 2 Uplinks (10:2:2).

Figure 6 also shows examples of different slot formats. Slot format indicates how each of the symbols within a single slot is used. It defines which symbols are used for uplink and which symbols are used for downlink within a specific slot. In LTE TDD, if a subframe is configured for DL or UL, all of the symbols within the subframe should be used as DL or UL. In NR, the symbols within a slot can be configured in various ways. In NR, there is no need to use every symbol within a slot; e.g., only a part of a slot may be used for data transmission. Also, a single slot can be divided into multiple segments of consecutive symbols that can be used for DL, UL or Flexible. 3GPP allows only 61 predefined symbol combinations within a slot. Figure 6 shows a subset of the 3GPP-defined symbol combinations for a slot. The predefined symbol allocation of a slot is called the slot format.

As shown in figure 6, SIB1 is decoded to determine frame configuration that specifies the TDD slot format, and also to determine TDD symbol information. This information is then used to derive location of the GP in the frame and duration of the GP. Then, this information is used to determine whether interference signals exist during the GP.

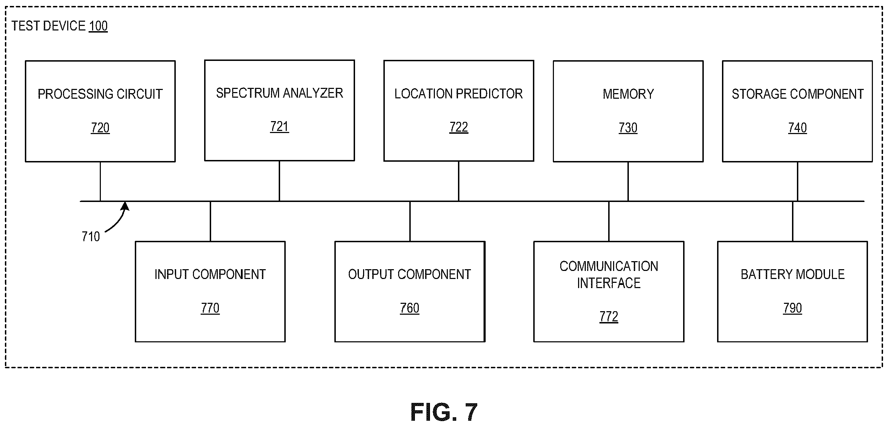

Figure 7 is a block diagram of the test device 100, according to an example of the present disclosure. The test device 100 may include a bus 710, a processing circuit 720, spectrum analyzer 721, location predictor 722, memory 730, a storage component 740, an input component 770, an output component 760, a communication interface 772, and battery module 790.

Bus 710 includes a component that permits communication among the components of test device 100. Processing circuit 720 is implemented in hardware, firmware, or a combination of hardware and software. Processing circuit 720 may include one or more of a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component. In some examples, processing circuit 720 includes one or more processors capable of being programmed to perform a function. Memory 730 may include one or more memories such as a random access memory (RAM), a read only memory (ROM), and/or another type of dynamic or static storage device (e.g., a flash memory, a magnetic memory, and/or an optical memory) that stores information and/or instructions for use by processing circuit 720.

Spectrum analyzer 721 includes hardware and/or software as is known in the art for measuring and displaying the spectrum of a channel. Location predictor 722 estimates the location of the interference, e.g., the location of the interference source 13, if interference is detected during the transition period/guard period. The location predictor 722 may include machine readable instructions executed by a processor and/or other hardware. Estimation of location of the interference source 13 may be based on known geolocation techniques that can rely on RSS, PDOA and/or other parameters. Examples of the known geolocation techniques include: Angle of Arrival (AOA) which measures propagation direction of a signal (array antenna required); Time of Arrival (TOA)/Time Difference of Arrival (TDOA) which measures absolute time or time differences; Frequency Difference of Arrival (FDOA) which uses Doppler shift; and RSS)/ PDOA, which measures and uses a path loss model. In an example, location predictor 722 may comprise the EagleEye software provided by Viavi^{™}. Location predictor 722 may further include mapping software that provides visual and/or voice prompts to guide technicians to the suspected area of interference.

Storage component 740 stores information and/or software related to the operation and use of test device 100. For example, storage component 740 may include a hard disk (e.g., a magnetic disk, solid state disk, etc.) and/or another type of non-transitory computer-readable medium.

Input component 770 includes a component that permits test device 100 to receive information, such as via user input (e.g., a touch screen display, a keyboard, a keypad, a mouse, a button, a switch, and/or a microphone). Additionally, or alternatively, input component 770 may include a sensor for sensing information (e.g., a GPS component, an accelerometer, a gyroscope, and/or an actuator). Output component 760 includes a component that provides output information from test device 100 (e.g., a display, a speaker, a user interface, and/or one or more light-emitting diodes (LEDs)). Output component 760 may include a display providing a graphical user interface (GUI), such as GUI. Input component 770 and output component 760 may be combined into a single component, such as a touch responsive display, also known as a touchscreen.

Communication interface 772 includes a transceiver-like component (e.g., a transceiver and/or a separate receiver and transmitter) that enables test device 100 to communicate with other devices, such as via a wired connection, a wireless connection, or a combination of wired and wireless connections. Communication interface 772 may permit test device 207 to receive information from another device and/or provide information to another device. For example, communication interface 772 may include an Ethernet interface, an optical interface, a coaxial interface, an infrared interface, an RF interface, a universal serial bus (USB) interface, a Wi-Fi interface, a cellular network interface, or the like.

Battery module 790 is connected along bus 710 to supply power to processing circuit 720, memory 730, and internal components of test device 100. Battery module 790 may supply power during field measurements by test device 100. Battery module 790 permits test device 100 to be a portable.

Test device 100 may perform one or more processes described herein. Test device 100 may perform these processes by processing circuit 720 executing software instructions stored by a non-transitory computer-readable medium, such as memory 730 and/or storage component 740. A computer-readable medium is defined herein as a non-transitory memory device. A memory device includes memory space within a single physical storage device or memory space spread across multiple physical storage devices.

Software instructions may be read into memory 730 and/or storage component 740 from another computer-readable medium or from another device via communication interface 772. When executed, software instructions stored in memory 730 and/or storage component 740 may instruct processing circuit 720 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The test device 100 may include components other than shown. For example, the test device 100 may include a spectrum analyzer and power meter for performing tests described above. The number and arrangement of components shown in figure 7 are provided as an example. In practice, test device 100 may include additional components, fewer components, different components, or differently arranged components than those shown in figure 7. Additionally, or alternatively, a set of components (e.g., one or more components) of test device 100 may perform one or more functions described as being performed by another set of components of test device 100.

What has been described and illustrated herein are examples of the disclosure along with some variations. The terms, descriptions, and figures used herein are set forth by way of illustration only and are not meant as limitations. Many variations are possible within the scope of the disclosure, which is intended to be defined by the following claims-and their equivalents-in which all terms are meant in their broadest reasonable sense unless otherwise indicated.

## Claims

1. A test device to detect interference in a time division duplex, TDD, cellular network, the test device comprising:
a receiver to receive radio frequency, RF, TDD signals;
a display;
a spectrum analyzer; and
a processing circuit to:
automatically detect a TDD frame structure of the RF signals received via the receiver;
determine a transition period between uplink, UL, and downlink, DL, transmissions in which no UL and DL signals are being transmitted based on the TDD frame structure;
detect an interference signal during the transition period; and
display spectrum data generated by the spectrum analyzer, wherein the spectrum data includes the interference signal.

2. The test device of claim 1, wherein to automatically detect TDD frame structure of the RF signals, the processing circuit is to:
determine configuration information of the RF signals, the configuration information comprising one or more of service type, Absolute Radio Frequency Channel Number, AFRCN, bandwidth and center frequency.

3. The test device of claim 1, wherein to determine a transition period, the processing circuit is to:
identify a special subframe or a special slot in a received TDD frame; and
determine a location of a guard period and a duration of the guard period in the special subframe or the special slot, wherein the transition period comprises the guard period.

4. The test device of claim 3, wherein the processing circuit is to:
determine a frame configuration and a special subframe configuration of the received TDD frame to determine the location and the duration of the guard period,
wherein the frame configuration specifies a pattern of uplink subframes, downlink subframes and special subframes in the received TDD frame, and
the special subframe configuration specifies a number of symbols in each of a Downlink Pilot Time Slot and an Uplink Pilot Time Slot in a special subframe of the received TDD frame; or wherein the processing circuit is to:
determine a frame configuration that specifies a TDD slot format; and
determine TDD symbol configuration information for each slot,
wherein the location and the duration of the guard period is determined based on the TDD slot format and the TDD symbol configuration information for each slot; or wherein the processing circuit is to:
decode a system information block, SIB, 1 based on the TDD frame structure to determine information for deriving the location and the duration of the guard period.

5. The test device of claim 1, wherein the TDD cellular network comprises a Long-Term Evolution or a New Radio network.

6. A method of detecting interference in a time division duplex, TDD, cellular network using a test device, the method comprising:
receiving, RF, signals from a cell site at the test device;
determining a TDD technology used by the cell site for transmitting cellular signals based on the received RF signals;
automatically determining a TDD frame structure of the received RF signals based on the determined TDD technology;
determining a transition period between uplink, UL, and downlink, DL, transmissions in which no UL and DL signals are being transmitted based on the TDD frame structure;
detecting an interference signal during the transition period; and
displaying spectrum data generated by a spectrum analyzer, wherein the spectrum data includes the interference signal.

7. The method of claim 6, wherein automatically determining a TDD frame structure comprises:
determining configuration information of the received RF signals, the configuration information comprising one or more of service type, Absolute Radio Frequency Channel Number, AFRCN, bandwidth and center frequency.

8. The method of claim 6, wherein determining a transition period comprises:
determining whether the TDD technology comprises Long-Term Evolution, LTE, or New Radio, NR; and
determining information for a guard period in a TDD frame transmitted from the cell site based on whether the TDD technology comprises LTE or NR, wherein the transition period comprises the guard period.

9. The method of claim 8, wherein determining information for a guard period comprises:
identify a special subframe or a special slot in a received TDD frame; and
determine a location of the guard period and a duration of the guard period in the special subframe or the special slot.

10. The method of claim 9, further comprising:
determining a frame configuration and a special subframe configuration of the received TDD frame to determine the location and the duration of the guard period.

11. The method of claim 10, wherein the frame configuration specifies a pattern of uplink subframes, downlink subframes and special subframes in the received TDD frame, or wherein the special subframe configuration specifies a number of symbols in each of a Downlink Pilot Time Slot and an Uplink Pilot Time Slot in a special subframe of the received TDD frame.

12. The method of claim 9, further comprising:
determining a frame configuration that specifies a TDD slot format; and
determining TDD symbol configuration information for each slot,
wherein the location and the duration of the guard period is determined based on the TDD slot format and the TDD symbol configuration information for each slot.

13. The test device of claim 1 or the method of claim 6, further comprising:
determining a location of an interference source of the interference signal based on received signal strength, RSS, or power difference of arrival, PDOA, at a location predictor.

14. The test device of claim 1 or the method of claim 6, wherein the spectrum data is displayed as a spectrum trace or persistence.

15. A test device to detect interference in a time division duplex, TDD, cellular network, the test device comprising:
a receiver to receive radio frequency, RF, TDD signals;
a display;
a spectrum analyzer; and
a processing circuit to:
determine whether the RF signals comprise Long-Term Evolution, LTE, TDD frames or New Radio, NR, TDD frames
automatically detect a TDD frame structure of the TDD frames based on whether the TDD frames are determined to be LTE or NR;
determine a length and duration of a guard period between uplink, UL, and downlink, DL, transmissions in which no UL and DL signals are being transmitted based on the TDD frame structure;
detect an interference signal during the guard period; and
display spectrum data generated by the spectrum analyzer, wherein the spectrum data includes the interference signal.
